# EUROPEAN PATENT SPECIFICATION

(11) **EP 0 872 138 B1**
(45) Date of publication and mention of the grant of the patent: **01.08.2007**
(21) Application number: 96934860.6
(22) Date of filing: 29.10.1996
(51) Int. Cl.: H04Q 7/32

(54) **UPGRADING SOFTWARE IN A MOBILE TELEPHONE**
SOFTWARE AKTUALISIERUNG IN EINEM MOBILTELEFON
AMELIORATION DU LOGICIEL POUR TELEPHONES MOBILES

(30) Priority: 30.10.1995 FI 955188
(43) Date of publication of application: 21.10.1998
(73) Proprietor: Nokia Siemens Networks Oy, 02610 Espoo (FI)
(72) Inventor: LEPPÄNEN, Reijo, FIN-02200 Espoo (FI)
(74) Representative: Virkkala, Jukka Antero
(86) International application number: PCT/FI1996/000574
(87) International publication number: WO 1997/016938

(56) References cited:
- EP-A- 0 627 824
- EP-A- 0 739 148
- WO-A-95/04425
- WO-A-96/32679
- US-A- 4 927 789
- US-A- 5 046 082
- US-A- 5 109 403
- US-A- 5 418 524

## Description

The present invention relates to upgrading of software, especially of speech coding software in mobile telephones. In some cases different operators of mobile communication networks may use a different speech coding algorithm. Alternatively, the software of a mobile station can be suitable in principle but a more recent version of it may have been developed.

Mobile communication systems develop rapidly. When facilities are added or improved, a problem will be how to add these facilities to existing mobile stations. Prior art for improving a mobile station is to change at least partly the software therein in a service shop. This solution is not satisfactory to a user of a mobile station. The maintenance of software in a service shop may not be a good solution for the service shop either as this work rather causes peaks in work load than permanent business.

US patents 5109403 and US 5046082 disclose techniques for setting a limited number of parameters in a mobile telephone, but these techniques cannot be used to upgrade software in a manner that could not be foreseen at the manufacturing stage.

The object of the invention is to upgrade software in a mobile station so that the mobile station need not be taken for this purpose to a service shop. The objects of the invention are achieved with the methods and systems that are characterized by what is stated in the independent claims. Preferred embodiments are disclosed in the dependent claims.

The invention is based on the idea that software in a mobile station is arranged to be at least partly variable in response to incoming signals via a radio path and that actual executable code is transferred to a mobile station. In some embodiments, preinstalled and externally loaded software modules cooperate in such a manner that at least parts of each are executed.

An advantage of the method and system of the invention is for a user of a mobile station primarily that when new facilities are added, the mobile station need not be changed or even taken to a service shop. This also gives a competitive advantage to the mobile station manufacturer. Another advantage for the manufacturer is that the testing of the product may be shortened and the introduction of the product to the market can be expedited if the product can be upgraded even after delivery. The advantage to a network operator is that facilities can be added more flexibly as the user has subscriber terminal equipments which are technically ready for the use of new facilities.

The invention will now be explained in more detail by means of preferred embodiments with reference to the accompanying drawings, wherein
Figure 1 shows the elements of the mobile communication system essential for the invention;
Figure 2 shows an exemplary form of one record of a software database;
Figure 3 shows process steps when the mobile communication system starts loading a program;
Figure 4 shows process steps when a mobile station starts loading a program;
Figures 5 to 6 shows different techniques for changing the software of a mobile station.

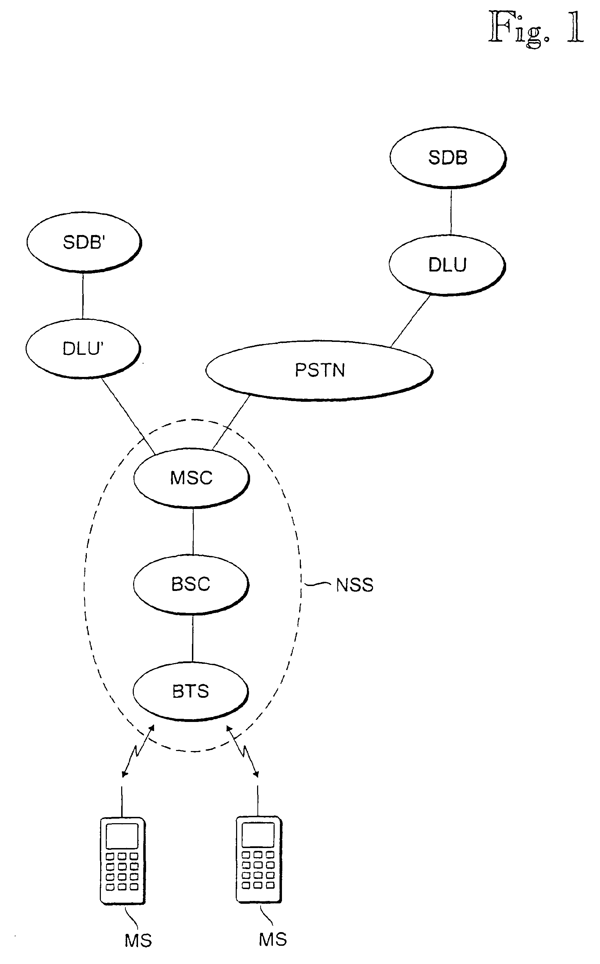

Figure 1 shows the elements of the mobile communication system essential for the invention. Mobile stations MS are connected to a base station BTS in a manner known per se. The base station BTS is connected to a base station controller BSC, which is, in turn, connected to a mobile services switching centre MSC. The network elements BTS to MSC form Network Subsystems (NSS) connected to other subsystems and the public switched telephone network PSTN. The elements of the subsystem NSS may naturally have a tree structure in such a manner that several base stations BTS may be connected to one controller BSC and similarly, several base station controllers BSC to one exchange MSC.

In accordance with one embodiment of the invention, Downloading Units DLU attend to the loading of software into mobile stations. Information on the software contained in the mobile stations is maintained in Software Database SDB. There may be only one or several software databases SDB. If the system includes only one software database SDB, all mobile services switching centres MSC can be connected to this software database via the public switched telephone centre PSTN, for example. In this case, the software database SDB corresponds to a great extent to the home location register HLR of the mobile communication system. The loading of software into the mobile station can be started for example so that when the mobile station is registering into the network, the network sends an inquiry to the mobile station about the software it contains. If the mobile station does not respond to the inquiry in any way, the network deduces that the mobile station does not support this feature and the procedures will end. On the other hand, if the mobile station responds to the network as expected and indicates it contains the most suitable software, there is no need for loading the software, and the procedure ends in this case, too. A need for loading the software arises only when the mobile telephone responds to the inquiry to the network relating to the software and the response contains an indication that the software of the mobile station is not in all parts the most suitable one for this network. When a new software is loaded into the software database SDB, it can update the software of the mobile station to correspond to the loaded software.

The network (and especially the software downloading unit DLU) then has to deduce how urgently the software should be loaded. If the mobile station is moving to an area of an operator where the used speech coding or other necessary program is nct compatible, the loading of software should be started immediately. On the other hand, if the network finds out that the mobile station supports full-rate speech coding, but not for example enhanced full-rate speech coding, the network may inform the mobile station that this software supporting enhanced full-rate speech coding can be loaded. The user can then load the software at the required time by calling a specified service number, for example. The enhanced full rate speech coding in the GSM system used herein is only one example of this feature. It is not essential for the invention how the speech coding program operates, but how this program can be transferred into a mobile station. The same method could be used for transferring a more advanced identification procedure, a power saving algorithm or the like.

When software is loaded into a mobile station, the loading may take place on a traffic channel, for example, in such a manner that the whole capacity of one traffic channel is allocated to the loading of software into one mobile station at a time. The network may then send first a header field containing information on the program to be loaded (program type, function, version, length, etc.). The header field is followed by the contents of the program divided for example into several frames which may contain a checksum. When the mobile telephone receives a frame, it calculates the checksum from the data contained in the frame and compares it to the sent checksum. If the checksums are equal, the frame is stored into memory. If the checksums are different from one another, the mobile station may request the erroneous frame or the whole software to be loaded again. When the whole software is loaded (possibly after repeating some frames), it can be activated for use. "Activation" does not necessarily mean that the program would be executed immediately but when said program is needed the next time.

As an alternative to loading the software at each connection, the network may send new programs on some broadcast control channel to all mobile stations. This embodiment could be implemented by sending continuously new programs, for example.

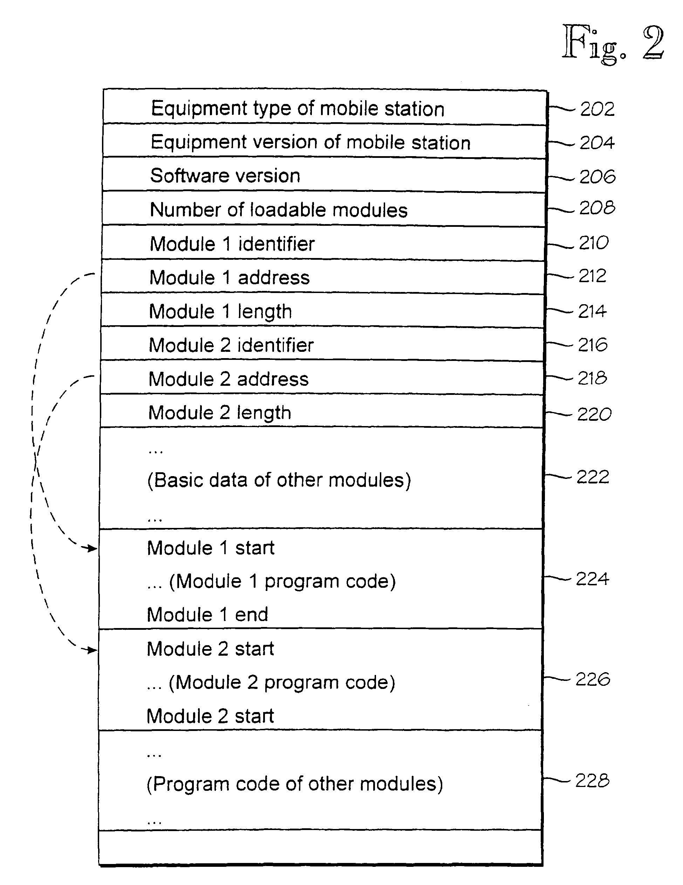

Figure 2 shows an exemplary form of a record of the software database SDB. Field 202 shows the equipment type of the mobile station and field 204 the equipment version. Similarly, the program version is in field 206. Field 208 shows the number of modules capable of being loaded into the mobile station. Fields 210 to 214 include identification data of the modules in triplets: the identifier of the module, the initial header and the length of the module. The next three fields contain corresponding information for the next module. Field 208 indicates the number of these triplets. The program code of module 1 is in area 224, of module 2 in area of 226, etc.

Although the easiest way to check the software of a mobile station is to compare the version numbers, it is not the only way. The compatibility of the software may be checked in other ways, for example by means of a checksum or by testing how the mobile station will respond to a specified message sent thereto.

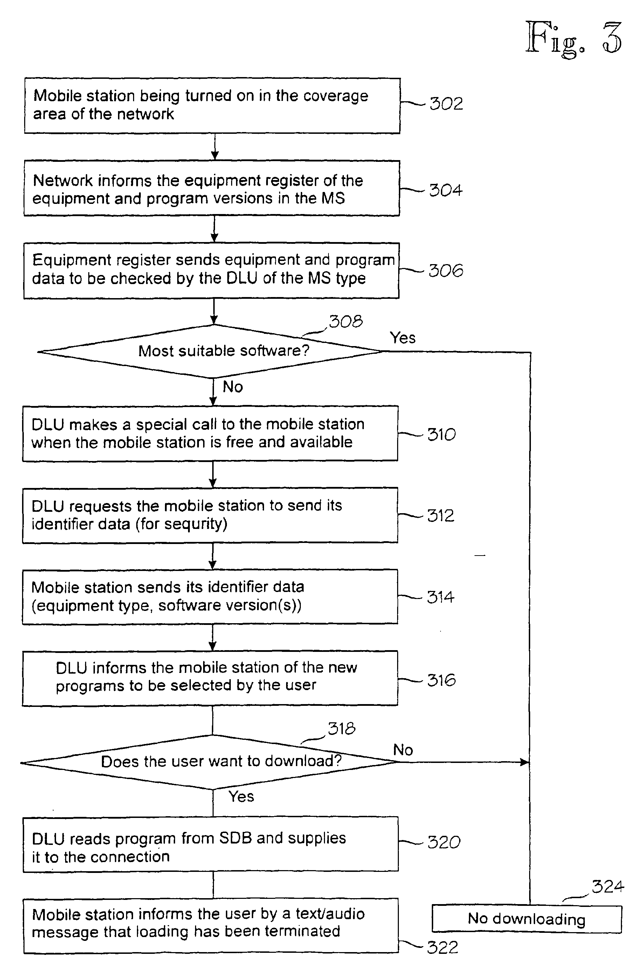

Figure 3 shows process steps when the mobile communication system starts loading the software. Figure 3 shows an embodiment where the operation is initiated by the mobile station being turned on in the coverage area of the network (step 302). In step 304 the network informs the equipment register of the equipment and program versions in the mobile station. In step 306 the equipment register sends the equipment and program data to be checked by the DLU of the mobile station type in question. In step 308 the DLU checks if the mobile station already has the most suitable software for the mobile station type. In step 310 the DLU makes a special call to the mobile station when the mobile station is free and available. In step 312 the DLU requests the mobile station to send its identifier data. In step 314 the mobile station sends its identifier data, e.g. the equipment type and the software versions. In step 316 the DLU informs the mobile station of the new programs to be selected by the user. In step 318 it is inquired on the display of the mobile station (or alternatively, by an audio signal) if the user requires loading. In step 320 the DLU reads the program from the SDB and supplies it to the connection. In step 322 the mobile station informs the user by a text or audio message that loading has been terminated.

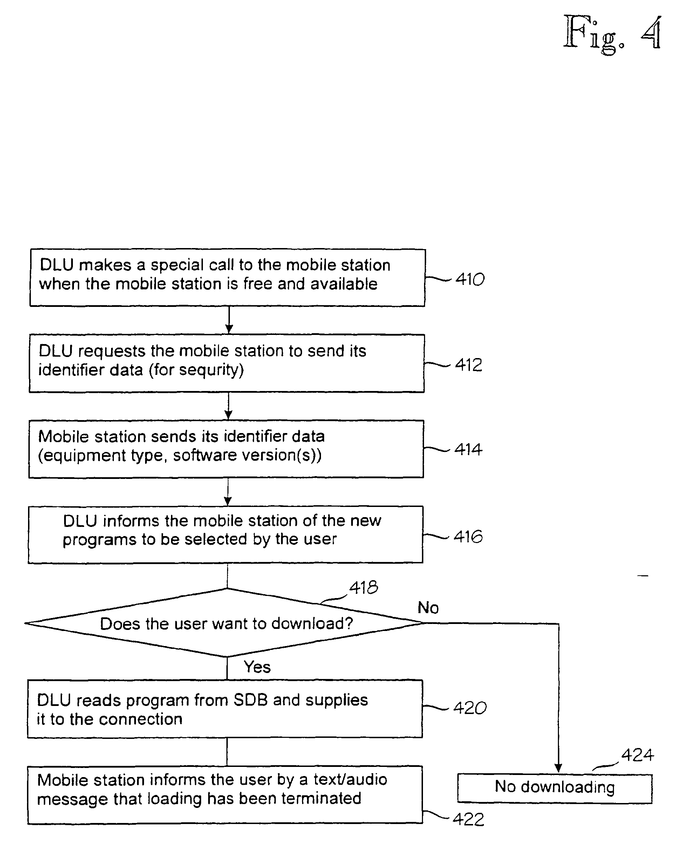

Figure 4 shows process steps when the mobile station starts loading the software. In step 410 the user makes a special call to the service number (the DLU) of the network. Steps 412 to 424 correspond to steps 312 to 324 explained in connection with Figure 3 and they will not be explained again.

In the following, the changes required by the loading of software according to the invention are examined. In an ordinary mobile station software is generally installed in one read-only-memory (ROM) whose contents cannot be changed after the manufacturing stage. In this connection, "ROM" refers to a fixedly programmed memory whose contents cannot be changed at least with the equipment in the mobile station. "RAM" similarly refers to a memory whose contents can be changed with the equipment in the mobile station. "Program to be updated" refers to the part of the software in a mobile station to be changed. Furthermore, "version" in this context is to be understood to refer widely to all modifications and not just to modifications of a different age.

The software of a mobile station of the invention may be updated e.g. in the following ways: (i) the mobile station may contain in the ROM several alternative programs one of which is selected for execution; (ii) the same as (i) but the programs are located in the RAM, and (iii) the ROM and RAM of the mobile station can cooperate so that parts of both are executed.

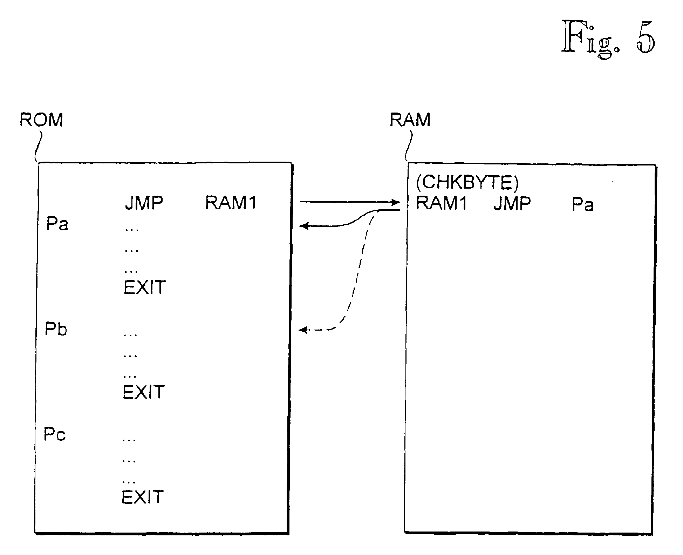

Figure 5 shows how a mobile station may contain several programs in the ROM one of which is selected for processing. In program segments the left column signifies a label at the source code level and a corresponding address in the executable code. Pseudocode JMP in the second column refers to a jump to the label mentioned in the third column or to a corresponding address in the executable code. The ellipsis (...) represents the part of the program to be executed. The pseudocodes "EXIT" terminating programs Pa to Pc naturally restore control to an upper level program.

The ROM contains in this example three alternative programs Pa to Pc of which at least one can be activated so that the execution of the program is preceded by a jump in the RAM to the address RAM1 to which is initialized a jump to the program (e.g. Pa) which is executed by default if not programmed otherwise. This default situation is described by unbroken arrows between the ROM and RAM. Any one of the programs Pa to Pc can be activated by writing a jump to the program in question in place of the jump instruction in the address RAM1 of the RAM. This change is illustrated by an arrow indicated with broken lines between the ROM and RAM. Before the program is executed, the processor of the mobile station can also make sure that the jump instruction in the address RAM1 contains a jump to a meaningful address. If this is not the case, the mobile station may initialize the jump instruction in the address RAM1 again to be directed to a program executed by default. The fact that the jump instruction is directed to a meaningful address can be ensured for example by calculating the checksum at least from part of the program to be executed. In order that the checksum need not be calculated from all the software, one check byte (CHKBYTE in this example) may be placed in front of the 3 byte jump instruction in the address RAM1 and the checksum can be calculated from the produced 4 byte area.

A restriction to the above described technique is that only such programs can be stored into the ROM whose contents are known at the manufacturing stage. In this way telephones can be manufactured to operate in the operation area of two or more network operators even when the operators require different programs.

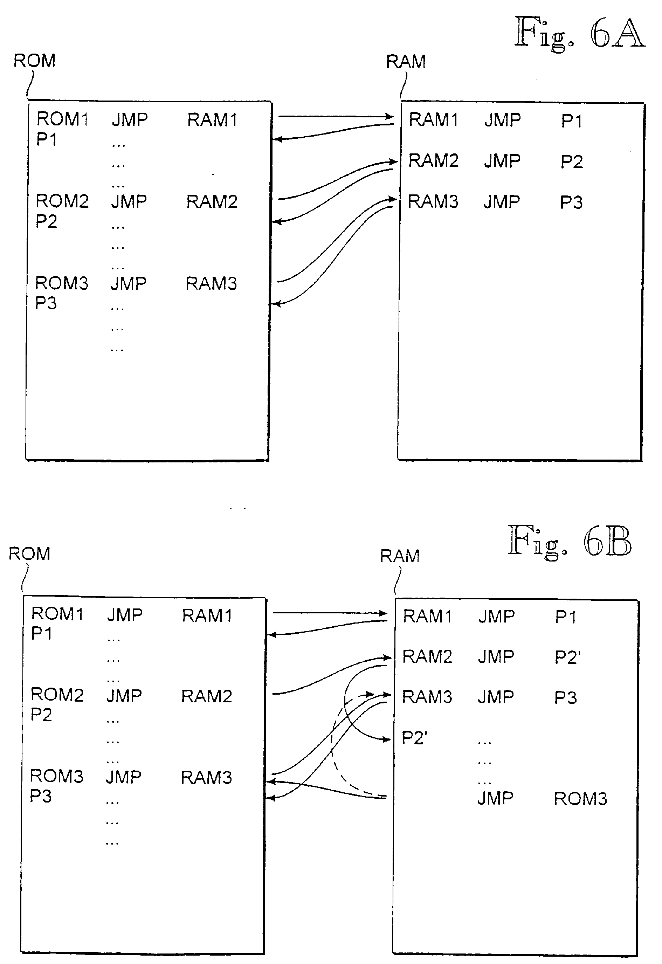

If the contents of the program are not known at the stage when the mobile station is manufactured, the contents of the program can be changed in such a manner that the mobile station contains the RAM to which one or more programs or at least parts of them are stored. The ROM and RAM preferably cooperate in such a manner that only the parts to be changed in the program have to be stored in the RAM. Figures 6A and 6B show an example of how the cooperation of the ROM and RAM can be realized. Figure 6a shows an initial situation. Some program in the ROM comprises three parts P1 to P3. As distinct from the situation in Figure 5, the parts P1 to P3 are not here alternatives but different parts of one program, all of which have to be executed. Execution of each part P1 to P3 is preceded by a jump to an address in the RAM, to the RAM1 to RAM3, respectively, to which a jump back to the parts P1 to P3 of the program in the RAM is initialized. One of these parts P1 to P3 can be replaced by a corresponding part in the RAM so that a jump to the replaced part of the program is written in the place of the jump instruction in the RAM. Replacing part P2 by a second part P2' is discussed as an example. A problem is caused by that the contents of the replacing part P2' and even its size are not known at the manufacturing stage of the mobile station. In the initial situation of Figure 6a the jump instruction of address RAM2 can be replaced only by an instruction of the same length (the length of the jump instruction is typically 3 bytes), without new data being written into the address RAM3. The address RAM3 cannot be transferred as in the address ROM3 of the ROM there is a jump to this address and the contents of the ROM cannot be changed. Referring to Figure 6B, the problem is solved in such a manner that the part P2' replacing the part P2 is placed in the empty part in the RAM and a jump instruction is placed in the address RAM2 at the beginning of the replacing part P2'. As after executing the original part P2, the program proceeds to the address ROM3, a jump to the end of the part P2' should also be placed in the same address. As there is any case a jump to the address RAM3 in this address, one jump instruction can be saved by terminating the part P2' by a jump instruction to the address RAM3, as shown by the arrow indicated with broken lines in Figure 6B.

The cooperation of the RAM and ROM saves resources of the mobile station, such as storage capacity and program downloading time.

In the following it is examined how a program can be transferred into a mobile station. Several techniques are given for this: (i) the program may be loaded via the radio path; (ii) one of several preinstalled programs can be selected via the radio path; (iii) the program may be loaded by a smart card or a magnetic card.

The loading of a program to a mobile station has already been discussed in connection with the changes the technique requires of a mobile communication network. The selection of one of several preinstalled programs can be realized in the way explained in connection with Figure 5, whereby information on the program to be executed is sent via the mobile communication network.

A program can be loaded to a mobile station by a smart card or a magnetic card. In this case there are two alternatives in use: the program can be executed directly from a smart card or it can be copied therefrom to the RAM of the mobile station. In the last mentioned case it can apply the technique explained in connection with Figure 6, by means of which the program of the mobile station can be only partly replaced.

It is preferable to send the program in a compressed form for minimizing transmission time. Although compression requires resources (storage space and calculation capability), decompression consumes resources only little. As a rule, the packing programs generally used in computers condense typical programs into a 1.5 to 2 times smaller space. If the decompressing program is not to be stored into the ROM, it can be sent along with the program to be transferred.

It is evident for those skilled in the art that as the art develops, the basic idea of the invention can be realized in many ways. The invention and its embodiments are thus not restricted to the examples described above, but they can vary within the scope of the claims.

## Claims

1. A method for updating software in a mobile station, wherein the method comprises the steps of:
establishing a connection between the mobile station and a mobile communication network (NSS);
automatically checking the software in the mobile station (MS); and
in response to said checking indicating that the software in the mobile station (MS) does not correspond to the software required by the mobile communication network (NSS), updating the software in the mobile station (MS),
wherein said updating the software in the mobile station (MS) comprises loading executable program code via a radio path.

2. A method according to claim 1, **characterized in that** the software in the mobile station (MS) is checked when the mobile station (MS) is registering into the network (NSS).

3. A method according to claim 1 or 2, **characterized in that** the software in the mobile station (MS) is checked in connection with an incoming call to the mobile station or an outgoing call from the mobile station.

4. A method according to claim 1, **characterized by** the steps of:
dividing the software to be updated into at least one block and calculating a checksum of each block;
sending each one of said blocks with its corresponding checksum from the network (NSS), one block at a time, and receiving same with the mobile station (MS);
calculating, with the mobile station (MS), a checksum from each received block and comparing the calculated checksum to the received checksum;
in response to the calculated checksum equalling the received checksum, storing the block into the mobile station; and in response to the calculated checksum not equalling the received checksum, requesting with the mobile station (MS) the network (NSS) to resend the block; and
in response to the software to be updated being entirely and successfully received, activating said software.

5. A method according to claim 1, **characterized in that** loading the software into the mobile station (MS) comprises the steps of:
broadcasting the software to be updated from the network (NSS) in blocks, each block having an associated checksum and a storage address;
receiving with the mobile station (MS) each block of the software to be updated and calculating a checksum from it;
in response to the calculated checksum equalling the received checksum, storing the block into the corresponding storage address in the mobile station (MS); and in response to the calculated checksum not equalling the received checksum, repeating the receiving and storing steps in respect of the block in question when it is sent the next time;
repeating the preceding three steps until the software to be updated has been entirely received.

6. A method according to claim 1, **characterized by** the steps of:
installing in the network at least one software database (SDB) being adapted to store information on the programs contained in the mobile stations;
installing in the network at least one downloading unit (DLU) being adapted to:
compare at least one program in the mobile station (MS) with the most suitable corresponding program intended for said mobile station type, and
in response to the program of the mobile station (MS) not being the most suitable version, to update the program of the mobile station (MS), or at least to inform the mobile station (MS) that a more suitable program can be loaded.

7. A method according to claim 6, **characterized in that** the downloading unit (DLU) updates the program in the mobile station (MS) upon detecting that the mobile station (MS) is not having an active call.

8. A method according to claim 7, **characterized in that**:
at least one telephone number is reserved for loading the programs; and
the user of the mobile station (MS) initiates the loading of the program by calling the number reserved for program loading.

9. A mobile station (MS) comprising a read-only-memory (ROM) and at least one program therein, **characterized in that** the mobile station (MS) further comprises:
a loading program in the read-only-memory (ROM) for loading a program to be updated, wherein the program to be updated comprises executable program code;
a read/write memory (RAM) for storing said executable program code;
checking means for automatically checking, in co-operation with a mobile telephone network, whether the software in the mobile station corresponds to the software required by the mobile communication network; and
means for receiving said executable program code via a radio path from a mobile telephone network, in case the software in the mobile station does not correspond to the software required by the mobile communication network.

10. A mobile station (MS) according to claim 9, **characterized in that** the read-only-memory (ROM) and read-write memory (RAM) cooperate in such a manner that the program to be updated comprises a basic part in the read-only-memory (ROM) and a supplementary part in the read-write memory (RAM).

11. A mobile station (MS) according to claim 10, **characterized in that**:
said at least a substantial part of a program is stored in the read-only-memory (ROM) and organised as modules, each one having an associated start address (P1 - P3);
a pointer to each start address (P1 - P3) is stored in the RAM;
and the mobile station is adapted to:
in respect of at least one original module in the ROM, receive a corresponding replacement module (P2) and store it into the RAM,
replace the pointer to the original module in the ROM with a pointer to the replacement module in the RAM.

12. A mobile telephone network comprising a radio path for communicating with a mobile station (MS), **characterized by**:
at least one software database (SDB) adapted to store at least one program to be updated for the mobile station (MS), wherein the program to be updated comprises executable program code; and
at least one downloading unit (DLU) for loading the executable program code into the mobile station (MS) via the radio path;
wherein the mobile telephone network is adapted to automatically check the software of the mobile station, in cooperation with the mobile station, and if it is indicated that the software in the mobile station does not correspond to the software required by the network, to update the software in the mobile station.

## Patentansprüche

1. Verfahren zur Aktualisierung von Software in einem Mobilfunkgerät, wobei das Verfahren die Schritte umfaßt:
Herstellen einer Verbindung zwischen dem Mobilfunkgerät und einem Mobilfunk-Kommunikationsnetzwerk (NSS);
automatisches Überprüfen der Software in dem Mobilfunkgerät (MS); und
in Reaktion auf die Überprüfung, Anzeigen, daß die Software in dem Mobilfunkgerät (MS) nicht der von dem Mobilfunk-Kommunikationsnetzwerk (NS) benötigten Software entspricht, Aktualisieren der Software in dem Mobilfunkgerät (MS),
wobei die Aktualisierung der Software in dem Mobilfunkgerät (MS) das Laden eines ausführbaren Programmcodes über einen Funkweg umfaßt.

2. Verfahren nach Anspruch 1, **dadurch gekennzeichnet, daß** die Software in dem Mobilfunkgerät (MS) überprüft wird, wenn das Mobilfunkgerät (MS) sich in dem Netzwerk (NSS) registriert.

3. Verfahren nach Anspruch 1 oder 2, **dadurch gekennzeichnet, daß** die Software in dem Mobilfunkgerät (MS) in Verbindung mit einem eingehenden Signal an das Mobilfunkgerät oder einem von dem Mobilfunkgerät ausgehenden Signal überprüft wird.

4. Verfahren nach Anspruch 1, **gekennzeichnet durch** die Schritte:
Teilen der Software, die aktualisiert werden soll, in wenigstens einen Block und Berechnen einer Prüfsumme für jeden Block;
Senden jedes Blockes mit seiner entsprechenden Prüfsumme an das Netzwerk (NSS), senden jeweils eines Blockes, und Empfangen desselben mit dem Mobilfunkgerät (MS);
Berechnen einer Prüfsumme für jeden empfangenen Block mit dem Mobilfunkgerät (MS) und Vergleichen der berechneten Prüfsumme mit der empfangenen Prüfsumme; ansprechend auf die berechnete Prüfsumme: Angleichen der empfangenen Prüfsumme, Speichern des Blocks in dem Mobilfunkgerät; und ansprechend auf die berechnete Prüfsumme: Nichtangleichen der empfangenen Prüfsumme, Anfragen mit dem Mobilfunkgerät (MS) an dem Netzwerk (NSS) den Block erneut zu senden; und
in Reaktion auf die gesendete und erfolgreich empfangene Software, die aktualisiert werden soll: Aktivieren der Software.

5. Verfahren nach Anspruch 1, **dadurch gekennzeichnet, daß** das Laden der Software in das Mobilfunkgerät (MS) die Schritte umfaßt:
Senden der Software, die aktualisiert werden soll, von dem Netzwerk (NSS) in Blöcken, wobei jeder Block eine zugehörige Prüfsumme und eine Speicheradresse aufweist;
Empfangen jedes Blocks der Software, die aktualisiert werden soll, mit dem Mobilfunkgerät (MS) und Berechnen einer Prüfsumme aus ihm;
in Reaktion auf die berechnete Prüfsumme, Angleichen der empfangenen Prüfsumme, Speichern des Blocks an der entsprechenden Speicheradresse in dem Mobilfunkgerät (MS); und in Reaktion auf die berechnete Prüfsumme, Nichtangleichen der empfangenen Prüfsumme, Wiederholen des Empfangs- und Speicherschrittes bzgl. des fraglichen Blockes, wenn er das nächste Mal gesendet wird;
Wiederholen der vorherigen drei Schritte bis die Software, die aktualisiert werden soll, gesendet und empfangen wurde.

6. Verfahren nach Anspruch 1 **gekennzeichnet durch** die Schritte:
Einrichten in dem Netzwerk wenigstens einer Software-Datenbank (STB), die eingerichtet ist, Information über die Programme, die in den Mobilfunkgeräten enthalten sind, zu speichern;
Einrichten in dem Netzwerk wenigstens einer Herunterladeeinheit (DLU), die eingerichtet ist:
wenigstens ein Programm in dem Mobilfunkgerät (MS) mit dem am besten geeigneten entsprechenden Programm, das für den Mobilfunkgerät-Typ vorgesehen ist, zu vergleichen, und
in Reaktion auf das Programm der Mobilfunkendstation (MS), das nicht die am besten geeignete Version ist, das Programm auf der Mobilfunkendstation (MS) zu aktualisieren, oder wenigstens das Mobilfunkgerät (MS) zu informieren, daß ein besser geeignetes Programm geladen werden kann.

7. Verfahren nach Anspruch 6, **dadurch gekennzeichnet, daß** die Herunterladeeinheit (DLU) das Programm in dem Mobilfunkgerät (MS) aktualisiert, wenn es erkennt, daß das Mobilfunkgerät (MS) kein aktives Signal aufweist.

8. Verfahren nach Anspruch 7, **dadurch gekennzeichnet, daß**:
wenigstens eine Telefonnummer für das Laden von Programmen reserviert ist; und
der Benutzer des Mobilfunkgerätes (MS) das Laden des Programmes durch Anrufen der Nummer, die für das Programmladen reserviert ist, auslöst.

9. Mobilfunkgerät (MS), das einen Lesespeicher (ROM) und wenigstens ein Programm darin aufweist, **dadurch gekennzeichnet, daß** das Mobilfunkgerät (MS) zusätzlich aufweist:
ein Ladeprogramm in dem Lesespeicher (ROM) zum Laden eines Programmes, das aktualisiert werden soll, wobei das Programm, das aktualisiert werden soll, ausführbaren Programmcode aufweist;
einen Lese/Schreib-Speicher (RAM) zum Speichern des ausführbaren Programmcodes;
ein Prüfmittel zur automatischen Prüfung, in Zusammenarbeit mit einem Mobilfunk-Telefon-Netzwerk, ob die Software in dem Mobilfunkgerät der Software entspricht, die von dem Mobilfunk-Kommunikations-Netzwerk benötigt wird; und
ein Mittel zum Empfangen des ausführbaren Programmcodes über eine Funkweg von einem Mobilfunk-Telefon-Netzwerk, falls die Software in dem Mobilfunkgerät nicht der Software entspricht, die von dem Mobilfunk-Kommunikations-Netzwerk benötigt wird.

10. Mobilfunkgerät (MS) nach Anspruch 9, **dadurch gekennzeichnet, daß** der Lesespeicher (ROM) und der LeseSchreib-Speicher (RAM) in einer derartigen Weise miteinander zusammenarbeiten, daß das Programm, das aktualisiert werden soll, einen Basisteil in dem Lesespeicher (ROM) und einen Zusatzteil in dem LeseSchreib-Speicher (RAM) aufweist.

11. Mobilfunkgerät (MS) nach Anspruch 10, **dadurch gekennzeichnet, daß**:
wenigstens ein wesentlicher Teil eines Programmes in dem Lesespeicher (ROM) gespeichert ist und in Modulen organisiert ist, wobei jedes eine zugehörige Startadresse (P1-P3) aufweist;
ein Pointer zu jeder Startadresse (P1-P3) in dem RAM gespeichert ist;
und das Mobilfunkgerät eingerichtet ist:
bezüglich wenigstens eines ursprünglichen Moduls in dem ROM, ein entsprechendes Ersatzmodul (P2) zu empfangen und es in dem RAM zu speichern;
den Pointer zu dem ursprünglichen Modul in dem ROM durch einen Pointer zu dem Ersatzmodul in dem RAM zu ersetzen.

12. Mobilfunktelefonnetzwerk, das einen Funkweg zur Kommunikation mit einem Mobilfunkgerät (MS) aufweist, **gekennzeichnet durch**:
wenigstens eine Software-Datenbank (SDB), die eingerichtet ist, wenigstens ein Programm, das für das Mobilfunkgerät (MS) aktualisiert werden soll, zu speichern, wobei das Programm, das aktualisiert werden soll, ausführbaren Programmcode aufweist; und
wenigstens eine Herunterladeeinheit (DLU) zum Laden des ausführbaren Programmcodes über den Funkweg in das Mobilfunkgerät (MS);
wobei das Mobilfunktelefonnetzwerk eingerichtet ist, automatisch die Software für das Mobilfunkgerät, in Zusammenarbeit mit dem Mobilfunkgerät, zu überprüfen, und wenn festgestellt wird, daß die Software in dem Mobilfunkgerät nicht mit der Software übereinstimmt, die von dem Netzwerk benötigt wird, die Software in dem Mobilfunkgerät zu aktualisieren.

## Revendications

1. Procédé de mise à jour de logiciel dans une station mobile, ce procédé comprenant les étapes de :
l'établissement d'une connexion entre la station mobile et un réseau de télécommunication mobile (NSS) ;
la vérification automatique du logiciel dans la station mobile (MS) ; et
en réponse à ladite vérification indiquant que le logiciel dans la station mobile (MS) ne correspond pas au logiciel requis par le réseau de télécommunication mobile (NSS), mise à jour du logiciel dans la station mobile (MS),
dans lequel ladite mise à jour de logiciel dans une station mobile (MS) comprend le chargement de code de programme exécutable via un trajet radio.

2. Procédé selon la revendication 1, **caractérisé en ce que** le logiciel dans la station mobile (MS) est vérifié lorsque la station mobile (MS) est inscrite sur le réseau (NSS).

3. Procédé selon la revendication 1 ou 2, **caractérisé en ce que** le logiciel dans la station mobile (MS) est vérifié en relation avec un appel entrant dans la station mobile ou un appel sortant de la station mobile.

4. Procédé selon la revendication 1, **caractérisé par** les étapes de :
la division du logiciel à mettre à jour en au moins un bloc, et calcul d'un total de contrôle de chaque bloc ;
l'envoi de chacun desdits blocs, avec son total de contrôle correspondant, depuis le réseau (NSS), un bloc à la fois, et réception de ce bloc par la station mobile (MS) ;
le calcul, au moyen de la station mobile (MS), d'un total de contrôle de chaque bloc reçu, et comparaison du total de contrôle calculé au total de contrôle reçu ;
en réponse au fait que le total de contrôle calculé égale le total de contrôle reçu, stockage du bloc dans la station mobile; et, en réponse au fait que le total de contrôle calculé n'égale pas le total de contrôle reçu, demande, au moyen de la station mobile (MS), au réseau (NSS) de renvoyer le bloc ; et
en réponse au fait que le logiciel à mettre à jour est reçu en totalité et avec succès, activation dudit logiciel.

5. Procédé selon la revendication 1, **caractérisé en ce que** le chargement du logiciel dans la station mobile (MS) comprend les étapes de :
la diffusion du logiciel à mettre à jour depuis le réseau (NSS) par bloc, chaque bloc ayant un total de contrôle associé et une adresse de stockage;
la réception, au moyen de la station mobile (MS), de chaque bloc de logiciel à mettre à jour, et calcul d'un total de contrôle de celui-ci ;
en réponse au fait que le total de contrôle calculé égale le total de contrôle reçu, stockage du bloc à l'adresse de stockage correspondante dans la station mobile (MS) ; et en réponse au fait que le total de contrôle calculé n'égale pas le total de contrôle reçu, répétition des étapes de réception et de stockage en ce qui concerne le bloc en question, lorsqu'il est envoyé la fois suivante ;
la répétition des trois étapes précédentes jusqu'à ce que le logiciel à mettre à jour ait été reçu en totalité.

6. Procédé selon la revendication 1, **caractérisé par** les étapes de :
l'installation dans le réseau d'au moins une base de données de logiciel (SDB) adaptée pour stocker des informations sur les programmes contenus dans les stations mobiles ;
l'installation dans le réseau d'au moins une unité de téléchargement (DLU) adaptée pour :
comparer au moins un programme dans la station mobile (MS) au programme correspondant le plus approprié destiné audit type de station mobile, et
en réponse au fait que le programme de la station mobile (MS) n'est pas la version la plus appropriée, mise à jour du programme de la station mobile (MS), ou au moins notification de la station mobile (MS) qu'un programme plus approprié peut être chargé.

7. Procédé selon la revendication 6, **caractérisé en ce que** l'unité de téléchargement (DLU) met à jour le programme dans la station mobile (MS) lorsqu'elle détecte que la station mobile (MS) n'a pas d'appel actif.

8. Procédé selon la revendication 7, **caractérisé en ce que** :
au moins un numéro de téléphone est réservé pour le chargement des programmes ; et
l'utilisateur de la station mobile (MS) initialise le chargement du programme en composant le numéro réservé pour le chargement du programme.

9. Station mobile (MS) comprenant une mémoire morte (ROM) et au moins un programme dans celle-ci, **caractérisée en ce que** la station mobile (MS) comprend en outre :
un programme de chargement dans la mémoire morte (ROM) destiné à charger un programme à mettre à jour, dans lequel le programme à mettre à jour comprend du code de programme exécutable ;
une mémoire vive (RAM) destinée à stocker ledit code de programme exécutable ;
des moyens de vérification destinés à vérifier automatiquement, en coopération avec un réseau téléphonique mobile, si le logiciel dans la station mobile correspond au logiciel requis par le réseau de télécommunication mobile ; et
des moyens de réception dudit code de programme exécutable, via un trajet radio, depuis un réseau téléphonique mobile, dans le cas où le logiciel dans la station mobile ne correspond pas au logiciel requis par le réseau de télécommunication mobile.

10. Station mobile (MS) selon la revendication 9, **caractérisée en ce que** la mémoire morte (ROM) et la mémoire vive (RAM) coopèrent de telle sorte que le programme à mettre à jour comprend une partie de base dans la mémoire morte (ROM) et une partie supplémentaire dans la mémoire vive (RAM).

11. Station mobile (MS) selon la revendication 10, **caractérisée en ce que** :
ladite au moins une partie essentielle d'un programme est stockée dans la mémoire morte (ROM) et organisée en modules, dont chacun a une adresse de départ associée (P1 - P3) ;
un pointeur de chaque adresse de départ (P1 - P3) est stocké dans la RAM;
et la station mobile est adaptée pour :
en ce qui concerne au moins un module d'origine de la ROM, recevoir un module de remplacement correspondant (P2) et le stocker dans la RAM ;
remplacer le pointeur du module d'origine dans la ROM par un pointeur du module de remplacement dans la RAM.

12. Réseau téléphonique mobile comprenant un trajet radio pour la communication avec une station mobile (MS), **caractérisé par** ;
au moins une base de données de logiciel (SDB) adaptée pour stocker au moins un programme à mettre à jour pour la station mobile (MS), dans laquelle le programme à mettre à jour comprend du code de programme exécutable ; et
au moins une unité de téléchargement (DLU) destinée à charger le code de programme exécutable dans la station mobile (MS) via le trajet radio ;
dans lequel le réseau téléphonique mobile est adapté pour vérifier automatiquement le logiciel dans la station mobile, en coopération avec la station mobile et, s'il est indiqué que le logiciel dans la station mobile ne correspond pas au logiciel requis par le réseau, pour mettre à jour le logiciel dans la station mobile.
